# EUROPEAN PATENT SPECIFICATION

(11) **EP 1 222 809 B1**
(45) Date of publication and mention of the grant of the patent: **02.02.2005**
(21) Application number: 00972114.3
(22) Date of filing: 12.10.2000
(51) Int. Cl.: H04N 1/21, G06F 17/30, G06F 3/00, H04N 101/00

(54) **PRODUCING ICONS FOR ACCESSING IMAGE FILES TRANSFERRED FROM A DIGITAL CAMERA**
ERZEUGUNG VON IKONEN ZUM ZUGRIFF VON BILDDATEIEN, DIE VON EINER DIGITALEN KAMERA ÜBERTRAGEN SIND
ICONES DONNANT ACCES A DES FICHIERS IMAGES TRANSFERES DEPUIS UNE CAMERA NUMERIQUE

(30) Priority: 13.10.1999 US 159162 P
(43) Date of publication of application: 17.07.2002
(73) Proprietor: EASTMAN KODAK COMPANY, Rochester, New York 14650 (US)
(72) Inventor: WOLF, Edward, O., Rochester, NY 14624 (US); LYON, Lonne, R., Rochester, NY 14624 (US)
(74) Representative: Weber, Etienne Nicolas
(86) International application number: PCT/US2000/028271
(87) International publication number: WO 2001/028228

(56) References cited:
- WO-A-97/49057
- WO-A-99/40723
- US-A- 5 706 097
- US-A- 5 706 457
- US-A- 5 848 420

## Description

### CROSS REFERENCE TO RELATED APPLICATIONS

Reference is made to WO-01-28229 filed concurrently herewith, entitled "Accessing Image Files Stored in a Digital Camera by a Host Computer" by Edward Wolf et al., and WO-01-28227 filed concurrently herewith, entitled "Prioritizing The Transfer of Image Files from a Digital Camera to a Host Computer" by Edward Wolf et al.

### FIELD OF THE INVENTION

This invention relates generally to accessing image files transferred from a digital camera to a host computer by producing icons representative of portions of each transferred image file.

### BACKGROUND OF THE INVENTION

Digital images are often produced by electronic still cameras, such as the Kodak Digital Science DC265^{TM} camera sold by Eastman Kodak Company. Exemplary digital cameras are described in more detail in commonly assigned U.S. Patent Nos. 5,828,406, 5,633,678, and 5,477,264. These cameras include an image sensor, an analog to digital converter, and a storage device for storing the digital image files. There are many storage devices on which these digital images can be stored, including floppy magnetic discs, hard magnetic disc drives, and solid state memory (e.g., flash memory) cards.

The images can be download by removing the memory card (e.g., CompactFlash card) from the digital camera and inserting it into a card reader attached to a host computer, or by connecting the digital camera and host interface. Software provided with the digital camera is typically installed on the host computer and used to control the camera interface. This software typically provides commands that allow thumbnail (i.e., reduced resolution) images and full size images to be transferred from the camera to the host computer.

One type of design for implementing such software is described in U.S. Patent No. 5,848,420. This patent teaches a system and method for accessing data of a digital camera from a personal computer having a disk operating system, including a software program that permits the computer to access the memory in the digital camera through the serial communication port to make the memory appear as a disk to the operating system.

U.S. Patent No. 5,706,457 teaches an image display and archiving system and method which provides for multiple source acquisition and multiple destination distribution of image and document data. See also U.S. Patent No. 5,706,097, which teaches an index print with a digital recording medium containing still images, motion sequences, and sound sequences.

There is a problem with identifying not only a digital image within an image file which has been transferred to a host computer, but also significant components of the image file, such as an audio data segment.

### SUMMARY OF THE INVENTION

It is an object of the present invention to permit access to image files stored within a digital camera.

It is a further object of the invention to permit access to multiple components stored within an image file, such as a digital image and an audio data segment.

These objects are achieved by a method as set out in appended claim 1.

This invention enables a user to have access to information embedded within an image file (e.g., sound data) by synthesizing icons for the embedded files, thus making it appear to the user to be a separate file that can be used by an appropriate application (e.g., a wave file that can be played by a sound player application).

### BRIEF DESCRIPTION OF THE DRAWINGS

FIG. 1 illustrates a digital imaging system including a digital camera and a host computer that implements the present invention;
FIG. 2 is a block diagram of software components in accordance with the present invention;
FIG. 3A illustrates an exemplary view of a screen on a display monitor of the host computer of FIG. 1 after the digital camera is connected to the host computer;
FIG. 3B illustrates an additional exemplary view of a screen on a display monitor of the host computer depicting icons which represent files (including image data and audio segment data) and directories (or albums);
FIG. 4A illustrates the image file structure when no audio has been recorded with the image (for example, file P0000046.jpg in FIGS. 3B); and
FIG. 4B illustrates the image file structure when audio has been recorded with the image (for example, file P0000047.jpg in FIGS. 3B).

### DETAILED DESCRIPTION OF THE INVENTION

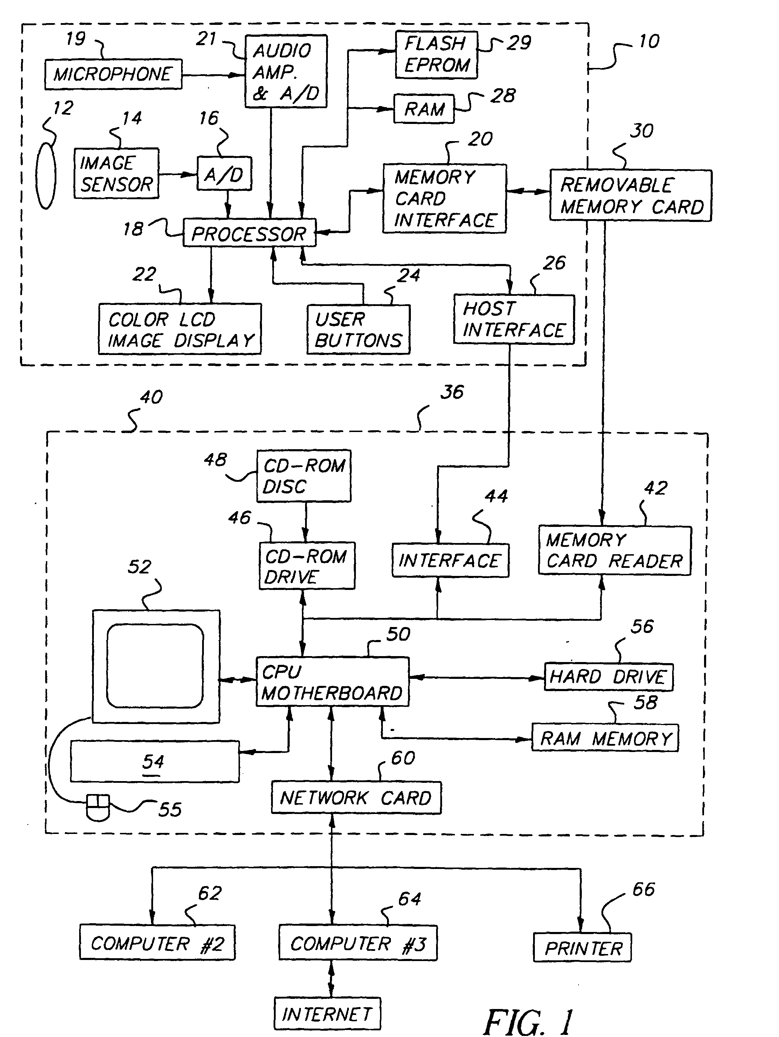

FIG. 1 illustrates a system which can be used for controlling a digital camera 10 attached to a host computer 40 using software contained on a compact disc (CD) 48 or other media in accordance with the present invention. The compact disc 48, containing the software that implements the methods described in this invention, is inserted into a well-known CD-ROM drive 46 in the host computer 40. Alternatively, the software can be stored on a floppy magnetic disc (not shown), a removable memory card 30, or another type of media. The compact disc 48, floppy disc, or removable memory card 30, or an alternative type of digital storage media, is supplied to the user along with the digital camera 10.

The digital camera 10 produces digital images that are stored on the removable memory card 30. The digital camera 10 includes a lens 12 having an adjustable aperture and shutter (not shown) for focusing light from a scene (not shown) on an image sensor 14, for example, a single-chip color charge coupled device (CCD), using the well-known Bayer color filter pattern. The analog output signal from the image sensor 14 is converted to digital data by an analog-to-digital (A/D) converter 16. The digital data is processed by a processor 18, and the processed digital image file is provided to a memory card interface 20 which stores the digital image file on the removable memory card 30. Removable memory cards 30 are known to those skilled in the art. For example, the removable memory card 30 can include memory cards adapted to the PCMCIA card interface standard, as described in the *PC Card Standard, Release 2. 0,* published by the Personal Computer Memory Card International Association, Sunnyvale, California, September 1991. The removable memory card 30 can also be adapted to the Compact Flash interface standard, such as described in the *CompactFlash Specification Version 1.3*, published by the CompactFlash Association, Palo Alto, California, August 5, 1998.

The processor 18 performs color interpolation followed by color and tone correction, in order to produce rendered sRGB image data. The rendered sRGB image data is then JPEG compressed and stored as an Exif version 2.1 file on the removable memory card 30. The Exif image format is defined in "Digital Still Camera Image File Format Standard, Exchangeable image file format for Digital Still Camera: Exif," JEIDA-49-1998, June 1998 by the Japan Electronics Industries Development Association (JEIDA) and the sRGB color space is described in "A standard default color space for the intemet - sRGB" by Michael Stokes, et al., available at http://www.color.org/sRGB.htmI. The processor 18 also provides "thumbnail" size image data to an image display 22, such as a color liquid crystal display (LCD), which displays the captured image for the user to review. The digital camera 10 is controlled by a series of user buttons 24.

The digital camera 10 also includes a microphone 19 and an audio amplifier and A/D converter 21. After capturing an image, the user may press one of the user buttons 24 in order to record audio, for example, annotation by the photographer. The audio signals from the microphone 19 are amplified and converted to digital data by the audio amplifier and A/D converter 21. The audio signals may be compressed, for example, using the well-known IMA ADPCM compression algorithm, and stored as Flashpix Extension data within the Exif 2.1 image file. The Flashpix audio extension is defined in "Extension to Flashpix version 1.0, Embedded Audio Annotations", January 26,1998 by the Digital Imaging Group, which is available at http://www.digitalimaging.org/.

The user buttons 24 also allow other camera features and operating modes to be selected. These modes can also be selected via the host computer 40. The features and modes include self-timer mode, flash mode, focus mode, exposure mode, white balance mode, picture quality (compression level) mode, resolution mode, sleep and power off times, quickview mode, video output format, and zoom position.

After a series of images have been captured by the digital camera 10 and stored on the removable memory card 30, the removable memory card 30 can be inserted into a memory card reader 42 in the host computer 40. Alternatively, an interface cable 36 can be used to connect between a host interface 26 in the digital camera 10 and a camera interface 44 in the host computer 40. The interface cable 36 can conform to, for example, the well-known universal serial bus (USB) interface specification.

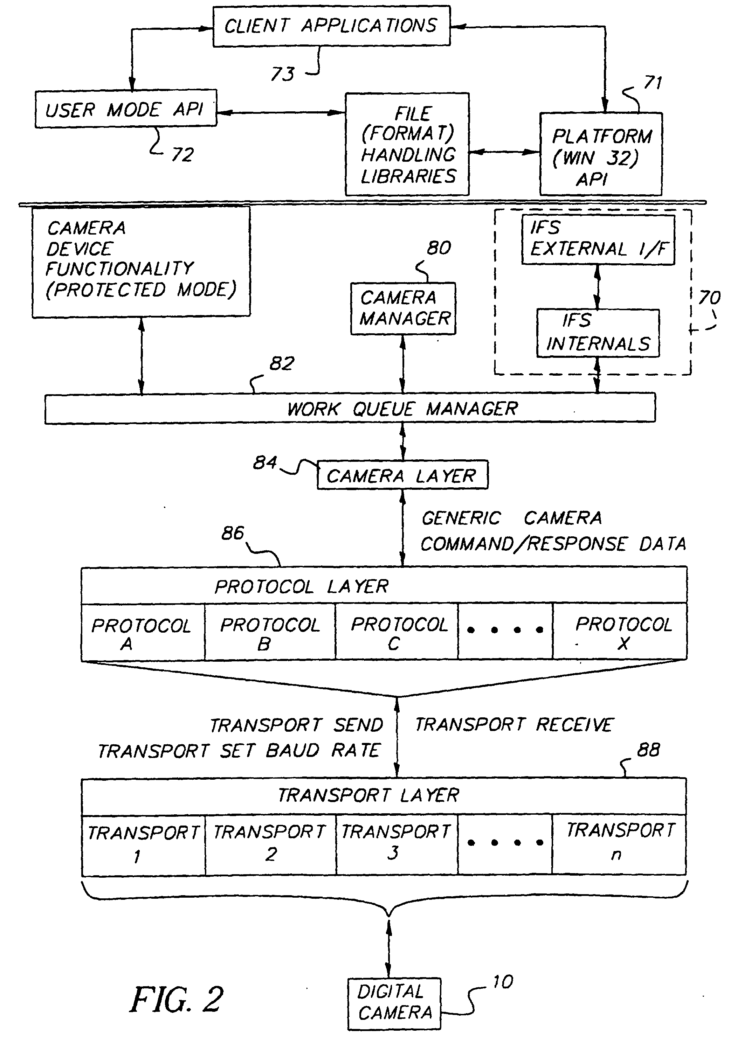

A central processing unit (CPU) 50 will be understood to use software in accordance with the present invention that will be described in more detail with reference to FIGS. 2, 3A-3B, and 4A-4B. The CPU 50 is coupled to a display monitor 52 and a keyboard 54. A mouse 55 permits the user to readily communicate with the CPU 50. The CPU 50 is also connected to a hard drive 56 and to random access memory (RAM) 58. The CPU 50 also communicates with networked devices via a network card 60. The network card 60 is connected to a second computer 62, a third computer 64 which serves as an internet service provider connection to the internet, and to a hardcopy printer 66.

FIG. 2 depicts a set of software components in accordance with the present invention for operation on an operating system, such as Windows 95 and Windows 98 OS based PCs, which enable applications to communicate with one or more digital cameras. One of these software components, the installable file system (IFS) 70, is a connection dependent file system which enables applications to communicate with the digital camera 10 through a Win32 Application Programmers Interface (API) 71 as a file system of a hard drive memory. See, for example, Chapter 16 of "Systems Programming for Windows 95," published by Microsoft Press, Redmond, Washington, Copyright 1996 by Walter Oney. Other components enable applications to access and set the camera properties, as well as initiate a capture of a new image by the digital camera 10.

A user mode Application Programming Interface (API) 72 controls camera device operation, as well as accessing information recorded in the image file. Client applications 73 access the user mode API 72 through a set of component object model (COM) interfaces (not shown) that enable:
* Detection/enumeration of cameras currently attached to the system;
* Communication with a specific camera (including registration for camera-related events); and
* Accessing data associated with an image file (e.g., thumbnails, and audio segment data).

An image file is accessed through the Win32 API 71, which then accesses the Installable File System (IFS) 70. Whenever the disclosure refers to accessing an image file, it will also be understood that a portion of an image file, such as an audio data segment, can be individually accessed, transferred, and operated on.

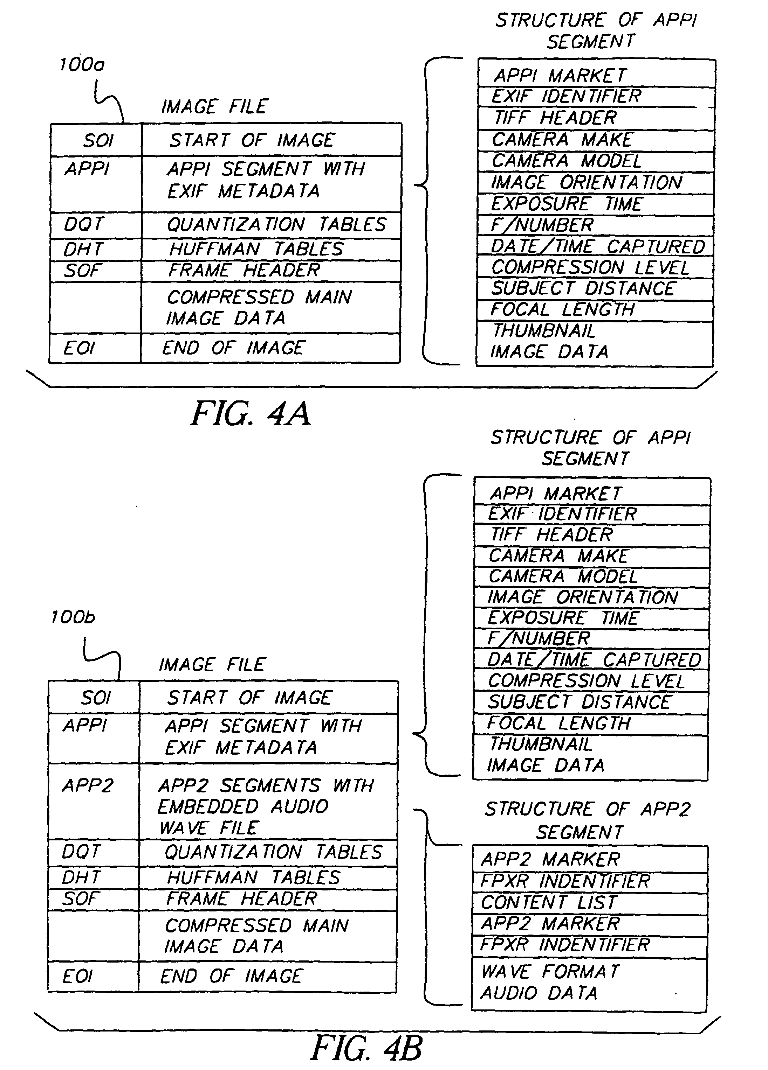

The user mode API 72 uses COM based interfaces. These interfaces are responsible for accessing image file data including any associated data, such as audio segment data, data and time of image capture, originating device, and the like. FIGS. 4A and 4B show exemplary image files and their structural organizations. The image file in FIG. 4A is numbered 100a, and the image file in FIG. 4B is numbered 100b. The nomenclature used to describe the image files 100a and 100b use acronyms which are well understood to those skilled in the art. The user mode API 72 also enables a user to control the operation of the digital camera 10. The operation of the digital camera 10 can be controlled via a network. More particularly, the host computer 40 (shown in FIG. 1) selectively operates on a plurality of image files captured by the digital camera 10. Each image file includes at least one digital image. Typically the image file includes audio segment data. Under the control of the host computer 40 or, alternatively, under the control of a user of the digital camera 10, a plurality of captured image files is stored in the removable memory card 30 in the digital camera 10. The digital camera 10 is connected to the host computer 40, and the host computer 40 identifies the plurality of captured image files stored on the removable memory card 30. In accordance with the present invention, the host computer 40 identifies the removable memory card 30 as though it were a file system of an additional hard drive memory for accessing the captured image files. The host computer 40 accesses and selectively transfers the captured image files from the removable memory card 30 to the RAM memory 58 of the host computer 40.

The Installable File System (IFS) software component 70 enables the operating system to view the digital camera 10 as a file system of an additional hard drive memory. The IFS 70 can be considered to have two components. The first is an external component (IFS-E) which satisfies operating system requests, such as notifying the operating system (OS) of new files and obtaining and relinquishing drive letters from the OS. The second is an internal component (IFS-I) which manages tracking and caching of files. IFS-I also provides convenient storage and flexible information retrieval to other layers.

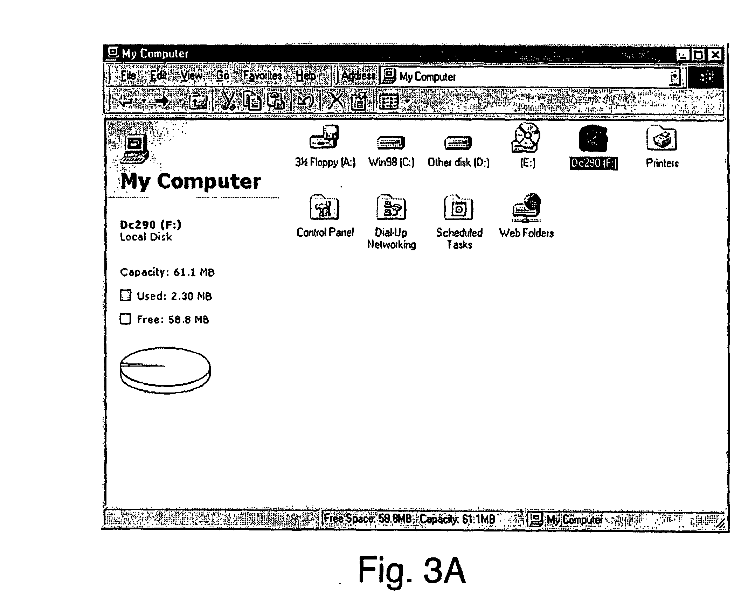

A Camera Manager 80 software component is responsible for enabling several of the other components to work together. When the Camera Manager 80 receives a "Camera Arrival" event to identify that the digital camera 10 has been connected to the host computer 40, it notifies the IFS 70 to obtain a drive identification alphabetic letter (i.e., 3 ½ floppy drive (A:) shown in FIG. 3A) from the system and then populate the drive with file and folder information. The Camera Manager 80 maintains camera instance information, such as the link between the unique identification assigned by a Camera Layer 84 software component and the drive identification alphabetic letter that the IFS 70 obtains from the system. When the Camera Manager 80 receives a "Camera Departure" event to indicate that the digital camera 10 has been disconnected from the host computer 40, it notifies the IPS 70 to remove the drive that was linked to the disconnected digital camera 10. The Camera Manager 80 is also responsible for determining what to do when the digital camera 10 is disconnected while an operation is in progress (or work is queued), and then reconnected at a later time.

A Work Queue Manager 82 software component facilitates image files captured by the digital camera 10 to be transferred to the host computer 40 in accordance with an assigned priority. When a user requests the host computer to operate on a particular untransferred image file, the Work Queue Manager 82 causes the image file transfer to be interrupted and returns the operation to transfer the remaining portion of the untransferred image files to the host computer 40 after the user requested image file is transferred.

The Work Queue Manager 82 also performs the following functions:
* Passes requests between the Camera Layer 84 and the layers directly above the Work Queue Manager 82;
* Serializes work requests;
* Provides buffers for the transfer of parameter and request data between other layers;
* Routes requests to the proper software component; and
* Manages callback information/asynchronous requests.

Once the Camera Layer 84 notifies the Camera Manager 80 of a new connection of a digital camera 10 to the host computer 40, the Camera Manager 80 can query for camera traits as follows:
* Whether the digital camera 10 is a read only device;
* Whether the digital camera 10 is able to delete files;
* Whether the digital camera 10 is able to rename files (without copying and deleting the file);
* If the digital camera 10 is only capable of reading whole files;
* If the digital camera 10 supports taking a picture while connected; and
* If the digital camera 10 contains support for the CoolFS module.

A Protocol Layer 86 is a software component which interprets generic commands which are passed through the Camera Layer 84 into commands that are understood by the camera firmware located in the Flash EPROM 29 (shown in FIG. 1). The Protocol Layer 86 determines what the true functionality of the digital camera 10 is (i.e., either interprets the generic command into the camera specific command(s) or returns an error). Once the Protocol Layer 86 interprets the requests into the camera specific commands, it then calls generic interface methods such as TransportSend and TransportReceive on a Transport Layer 88 software component. This makes it possible to provide support for a newly connected digital camera 10 by creating only a protocol layer for that newly connected digital camera 10 without making any changes to the other layers (provided the required transport layer is already in place from a previously connected camera). The Protocol Layer 86 is also the layer that exposes an image file with embedded sound as two separate files (one file being the image data, and the other file being the audio segment data).

A Transport Layer 88 is the software component responsible for packaging the protocol specific commands into the required transport format (e.g., Win95/Win98 Serial, WINNT Serial, or USB) so they can be transmitted via the interface cable 36 to the host interface 26 of the digital camera 10.

The following is a review of the operation of accessing digital camera files from a host computer in accordance with the present invention:

The user connects the digital camera 10 to the host computer 40 using the host interface 26. The system detects that a camera device gets plugged in and notifies the Camera Layer 84 of the new device. Each time a digital camera 10 is connected to the host computer 40, a camera alias is created in the Protocol Layer 86. The camera alias acts as an address of the digital camera 10.

Information about the interface 44 is cached away by the Camera Layer 84, and the Camera Layer 84 creates the unique camera alias for use in communication with the Camera Manager 80. This unique camera alias allows the Camera Manager 80 to specify what digital camera 10 it wishes to communicate with.

The Camera Layer 84 does a lookup in the registry to determine what protocol driver in the Protocol Layer 86 corresponds to the Vendor ID / Product ID for the digital camera 10 which was attached and then loads that driver. Since the transport already knows that the digital camera 10 was detected, the following layers shown in FIG. 2 are now brought into operation: the Camera Layer 84, the Protocol Layer 86, and the Transport Layer 88.

The Camera Layer 84 sends a "Camera Arrival" signal, including the unique camera alias, to the Camera Manager 80 indicating that the digital camera 10 has been detected. The Camera Manager 80 then creates it's own software model of the camera to maintain information such as the camera's unique alias (as known by the Camera Layer 84), as well as the drive identification alphabetic letter (as known by the IFS 70). This is one example of how the Camera Manager 80 connects the software components together.

The Camera Manager 80 then informs the IFS 70 that a new file system device has been installed. The IFS 70 obtains a new drive identification alphabetic letter from the system, and then asks the Camera Layer 84 for the contents of the drive.

Directory information is retrieved by the Camera Layer 84 and sent back to the IFS 70 (as AddFile and AddFolder messages). The choice of whether to recursively send file and folder information or wait for the IFS 70 to request it is depends upon the various priorities embodied in the Camera Layer 84.

A Client Application 73 sends a command through the User Mode API 72, or through the Win32 API 71. If the request came through the Win32 API 71, then it is transmitted through the IFS 70 software component.

Camera modeling information is retrieved from the Camera Manager 80 and the request is passed to the unique camera alias on the Work Queue Manager 82. The request is picked up by the Camera Layer 84 which uses its own camera modeling information to determine what protocol driver in the Protocol Layer 86 to forward the request to.

The protocol driver then reformats the generic Camera Layer 84 command into camera specific command(s). Such commands can include determining what images are stored in the removable memory card 30 of the digital camera 10 and reading information from the removable memory card 30, setting the date and time properties of the digital camera 10. The camera specific command(s) are then sent to the Transport Layer 88 which sends them via the interface cable 36 to the digital camera 10. Any reply from the camera is retrieved and sent back up the chain in reverse order.

The following is used to transfer image files from the removable memory card 30 of the digital camera 10 to the host computer 40 in accordance with an assigned priority and permit the interruption of such transfer to operate on an untransferred image. When the digital camera 10 is connected to the host computer 40 and there are no user commands or OS file requests, low priority read requests are assigned by the Camera Manager 80 and cause the low priority image files to be transferred during idle time on the host computer 40. This process is also know as pre-fetching. The host computer 40 transfers the image files one at a time from the removable memory card 30 of the digital camera 10 to the host computer memory (i.e., RAM 58 or the hard drive 56).

When the Client Application 73 software component requests that an image file in the digital camera 10 be transferred, there are two conditions. First, if the requested image file has been prefetched or already transferred to the host computer 40, the prefetched image file can be rapidly accessed and displayed from either the hard drive 56 or the RAM memory 58. It is not necessary to transfer the image file from the digital camera 10 to the host computer 40 over the limited bandwidth interface which would provide a slower response time to the user. In this instance, the IFS 70 software component appears to be making a request to retrieve data from a file stored in the digital camera 10, but it is actually retrieving the file from the hard drive 56 or RAM memory 58 of the host computer 40.

In the second condition, the digital camera 10 is in the process of transferring low priority image files to the host computer 40 and the particular image file requested has not yet been transferred. In this instance, the IFS 70 software component sends a higher priority request to the Work Queue Manager 82, and the Camera Layer 84 responds to the Work Queue Manager 82 and recognizes a higher priority request. The Work Queue Manager 82 causes the interruption of the low priority image file transfer and requests the Camera Layer 84 to operate on the particular higher priority untransferred image file. After this operation is completed in a manner discussed above, the Work Queue Manager 82 returns to its lower priority requests and continues the transfer of the low priority image files.

If the user disconnects the digital camera 10 from the host computer 40, the Camera Layer 84 is notified about this disconnection and blocks all requests targeted for that digital camera 10. The Camera Layer 84 then sends a "Camera Departure" signal to the Camera Manager 80. Note that there generally are two common serial transports associated with digital cameras. They are referred to as RS-232 and Universal Serial Bus (USB). In the case of an RS-232 transport, the Camera Layer 84 detects the disconnection by a failure of communication. The Camera Manager 80 then notifies the IFS 70 of the disconnect, and the IFS 70 removes the drive identification alphabetic letter from the host computer 40. The Camera Layer 84 then completes the remaining requests for the digital camera 10 from the Work Queue Manager 82.

FIG. 3A illustrates an exemplary view of a screen on a display monitor 52 of the host computer 40 after the digital camera 10 is connected to the host computer 40. This illustrates that the digital camera 10 appears as another drive in the host computer 40. For example, as shown in FIG. 3A, A: is a floppy drive, C: and D: are hard drives, E: is a CD-ROM, and F: is the DC290 digital camera. The left side of the screen shows the storage capacity of the digital camera 10 and how much storage is currently consumed, which is what the user would see for any drive on the host computer 40.

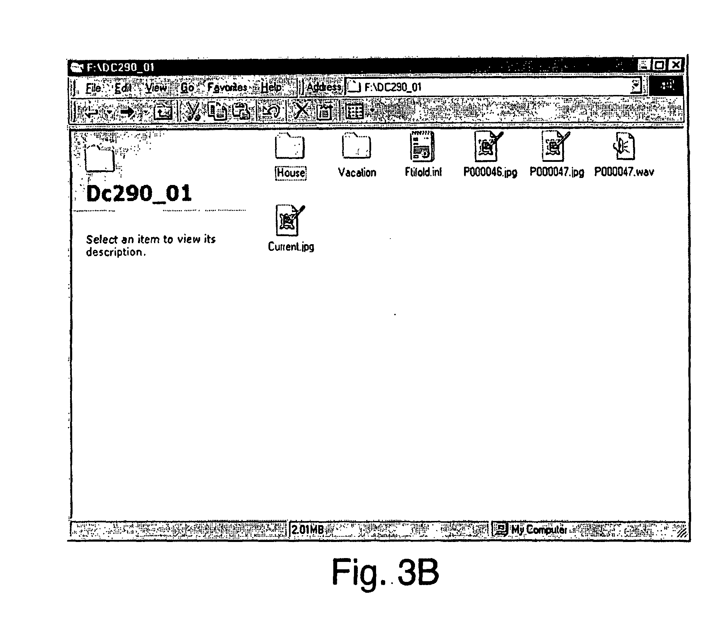

FIG. 3B illustrates an additional exemplary view of a screen on the display monitor 52 of the host computer 40 depicting icons which represent files (including image data and audio segment data) and directories. The shown representative directory is an album.

In accordance with the present invention, the image files stored in the digital camera 10 can be accessed (e.g., viewed, copied or deleted) over a network, including the internet, and the digital camera 10 can be controlled via the network (e.g., take a new image by "selecting" an appropriate "current picture" file icon). The file current.jpg depicted in FIG. 3B enables a user to take a new picture from either the host computer 40 or one of the network computers (i.e., computer 62 or computer 64 shown in FIG. 1) when the digital camera 10 is connected via the host interface 26 to the host computer 40. When the user opens the file current.jpg, the Win32 API 71 provides this user request to the IFS 70 software component. This request is passed down through the various software layers to the digital camera 10.

When the user opens the current.jpg file on the host computer 40, the digital camera 10 exposes a new image onto the image sensor 14, processes the image, and temporarily stores the processed image in the RAM memory 28. The Protocol Layer 86 monitors the digital camera 10, which responds when the image has been captured and stored. The image is then automatically transferred from the digital camera 10 to the host computer 40 and stored in the host computer's memory (e.g., RAM 58 or hard drive 56), and displayed to the user on the display monitor 52 of the host computer 40. Thus, by simply opening the particular image file, the user is able to instruct the digital camera 10 to capture a new image and to immediately display the captured image on the host computer 40 either locally or via the network.

In accordance with the present invention, the host computer 40 identifies and selectively transfers at least one image file captured by the digital camera 10 which includes a digital image and at least one audio data segment. After storing the captured image file in the removable memory card 30 of the digital camera 10, the digital camera 10 is connected to the host computer 40 via the interface cable 36. The host computer 40 then identifies the captured image file and recognizes the presence of the digital image and the audio data segment stored in the removable memory card 30.

As shown in FIG. 3B, at least two icons are provided on the display monitor 52 of the host computer 40 which respectively represent the digital image and the audio data segment. The digital image file is shown as file P0000047.jpg. Even though P0000047.jpg is a single file, the audio data segment is represented as a separate wave file P0000047.wav along with the image file. A user can then selectively access the digital image icon or the audio data segment icon to cause the digital image or the audio data segment to be transferred from the removable memory card 30 of the digital camera 10 to the host computer 40.

FIG. 4A illustrates the image file structure when no audio has been recorded with the image (for example, file P0000046.jpg in FIGS. 3B). FIG. 4B illustrates the image file structure when audio has been recorded with the image. This is shown as file P0000047.jpg in FIG. 3B. Even though P0000047.jpg is a single file, the audio gets exposed as a separate wave file P0000047.way along with the image file as shown in FIG. 3B.

In accordance with the present invention, when the user opens an audio data segment of a particular image file, i.e., if the user double clicks on the P0000047.wav icon of FIG. 3B in order to use their default sound player to play back this audio file, the Win32 API 71 issues a read request to the IFS 70. The two transfer conditions previously specified are then invoked to determine how to operate on the requested image file. If the audio data segment file has not yet been transferred to the host computer 40, then the Protocol Layer 86 receives the read request and determines the associated image file. The Protocol Layer 86 then reads only the audio data segment from the corresponding image file on the removable memory card 30 of the digital camera 10 and reformats it to be in the appropriate form.

### Parts List

- 10: digital camera
- 12: lens
- 14: image sensor
- 16: A/D converter
- 18: processor
- 19: microphone
- 20: memory card interface
- 21: audio amplifier and A/D converter
- 22: image display
- 24: user buttons
- 26: host interface
- 28: RAM memory
- 30: removable memory card
- 36: interface cable
- 40: host computer
- 42: card reader
- 44: camera interface
- 46: CD-ROM drive
- 48: compact disc
- 50: CPU
- 52: display monitor
- 54: keyboard
- 55: mouse
- 56: hard drive
- 58: RAM
- 60: network card
- 62: second computer
- 64: third computer
- 66: hardcopy printer
- 70: Installable File System
- 71: Win32 application programmers interface
- 72: user mode application programming interface
- 73: Client Applications
- 80: Camera Manager
- 82: Work Queue Manager
- 84: Camera Layer
- 86: Protocol Layer
- 88: Transport Layer
- 100a: image file
- 100b: image file

## Claims

1. A method for accessing at least one image file transferred from a digital camera (10) to a host computer (40), the at least one image file having a digital image and at least one audio data segment, by producing respective icons for each of said digital image and audio data segment, the method comprising the steps of:
(a) storing the at least one image file in a memory (30) in the digital camera (10);
(b) coupling the memory (30) to the host computer (40) so that the host computer (40) identifies the at least one image file, recognizing the presence of the digital image and the at least one audio data segment in the memory (30);
(c) producing at least two icons which are provided on a display (22) associated with the host computer (40) and which respectively represent the digital image and the at least one audio data segment;
(d) selectively accessing the digital image icon or the at least one audio data segment icon to cause the transfer of the digital image or the at least one audio data segment, respectively, from the memory (30) to the host computer (40) for access by a user.

2. The method of claim 1 wherein the memory (30) is a removable memory card.

3. The method of claim 1 wherein the memory (30) is a PCMCIA card.

4. The method of claim 1 wherein step (c) includes using software in the host computer (40) to identify predetermined icons which are displayed in association with the digital image and the at least one audio data segment.

5. The method of claim 1 wherein step (d) includes accessing the selected icons to provide a video image of the digital image or the audio sound of the audio data segment, individually or in combination.

6. The method of claim 1 wherein the host computer (40) includes a hard drive memory (56) for storing the transferred digital image or the at least one transferred audio data segment, and wherein the host computer (40) identifies the digital camera memory (30) as though it were a file system of an additional hard drive memory for accessing the image files.

## Patentansprüche

1. Verfahren für den Zugriff auf mindestens eine von einer digitalen Kamera (10) zu einem Hostrechner (40) übertragenen Bilddatei, die ein digitales Bild und mindestens ein Audiodatensegment umfasst, durch Erstellen jeweiliger Icons für jedes der digitalen Bilder und Audiodatensegmente, mit den Schritten:
a) Speichern der mindestens einen Bilddatei in einem Speicher (30) in der digitalen Kamera (10);
b) Verbinden des Speichers (30) mit dem Hostrechner (40) derart, dass der Hostrechner (40) die mindestens eine Bilddatei identifiziert und das Vorhandensein des digitalen Bildes und des mindestens einen Audiodatensegments im Speicher (30) erkennt;
c) Erstellen mindestens zweier Icons, die auf einem dem Hostrechner (40) zugeordneten Display (22) bereitgestellt sind und jeweils das digitale Bild und das mindestens eine Audiodatensegment darstellen;
d) wahlweises Zugreifen auf das digitale Bildicon oder das mindestens eine Audiodatensegment, um jeweils die Übertragung des digitalen Bildes oder des mindestens einen Audiodatensegments vom Speicher (30) zum Hostrechner (40) für den Zugriff durch einen Benutzer zu bewirken.

2. Verfahren nach Anspruch 1, worin der Speicher (30) eine entnehmbare Speicherkarte ist.

3. Verfahren nach Anspruch 1, worin der Speicher (30) eine PCMCIA Karte ist.

4. Verfahren nach Anspruch 1, worin bei Schritt c) Software im Hostrechner (40) verwendet wird, um vorbestimmte Icons zu identifizieren, die in Verbindung mit dem digitalen Bild und dem mindestens einen Audiodatensegment dargestellt sind.

5. Verfahren nach Anspruch 1, worin Schritt d) das Zugreifen auf die ausgewählten Icons umfasst, um ein Videobild des digitalen Bildes oder den Audiosound des Audiodatensegments einzeln oder in Verbindung miteinander bereitzustellen.

6. Verfahren nach Anspruch 1, worin der Hostrechner (40) einen Festplattenspeicher (56) zum Speichern des übertragenen Bildes oder des mindestens einen übertragenen Audiodatensegments aufweist, und worin der Hostrechner (40) den digitalen Kameraspeicher (30) identifiziert, als wäre er ein Dateiensystem eines zusätzlichen Festplattenspeichers für den Zugriff auf die Bilddateien.

## Revendications

1. Procédé destiné à accéder à au moins un fichier d'image transféré à partir d'un appareil de prise de vues numérique (10) vers un ordinateur hôte (40), le au moins un fichier d'image comportant une image numérique et au moins un segment de données audio, en produisant des icônes respectives pour chacun de ladite image numérique et dudit segment de données audio, le procédé comprenant les étapes consistant à :
(a) mémoriser le au moins un fichier d'image dans une mémoire (30) de l'appareil de prise de vues numérique (10),
(b) coupler la mémoire (30) à l'ordinateur hôte (40) de sorte que l'ordinateur hôte (40) identifie le au moins un fichier d'image, reconnaître la présence de l'image numérique et du au moins un segment de données audio dans la mémoire (30),
(c) produire au moins deux icônes qui sont fournies sur un affichage (22) associé à l'ordinateur hôte (40) et qui représentent respectivement l'image numérique et le au moins un segment de données audio,
(d) accéder sélectivement à l'icône de l'image numérique ou à l'icône du au moins un segment de données audio pour provoquer le transfert de l'image numérique ou du au moins un segment de données audio, respectivement, à partir de la mémoire (30) vers l'ordinateur hôte (40) en vue d'un accès par un utilisateur.

2. Procédé selon la revendication 1 dans lequel la mémoire (30) est une carte mémoire amovible.

3. Procédé selon la revendication 1, dans lequel la mémoire (30) est une carte PCMCIA.

4. Procédé selon la revendication 1, dans lequel l'étape (c) comprend l'utilisation d'un logiciel dans l'ordinateur hôte (40) pour identifier les icônes prédéterminées qui sont affichées en association avec l'image numérique et le au moins un segment de données audio.

5. Procédé selon la revendication 1, dans lequel l'étape (d) comprend le fait d'accéder aux icônes sélectionnées pour fournir une image vidéo de l'image numérique ou le son audio du segment de données audio, individuellement ou en combinaison.

6. Procédé selon la revendication 1, dans lequel l'ordinateur hôte (40) comprend une mémoire d'unité de disque dur (56) destinée à mémoriser l'image numérique transférée ou le au moins un segment de données audio transféré, et dans lequel l'ordinateur hôte (40) identifie la mémoire de l'appareil de prise de vues numérique (30) comme s'il s'agissait d'un système de fichier d'une mémoire d'unité de disque dur supplémentaire pour accéder aux fichiers d'image.
